Europäisches Patentamt

European Patent Office

Office européen des brevets

(19)

(11) Veröffentlichungsnummer : **0 324 024 B1**

(12) # EUROPÄISCHE PATENTSCHRIFT

(45) Veröffentlichungstag der Patentschrift :
24.06.92 Patentblatt 92/26

(51) Int. Cl.⁵ : **B01J 49/00**

(21) Anmeldenummer : 88907060.3

(22) Anmeldetag : 08.07.88

(86) Internationale Anmeldenummer :
PCT/EP88/00618

(87) Internationale Veröffentlichungsnummer :
**WO 89/00453 26.01.89 Gazette 89/03**

(54) **VERFAHREN UND VORRICHTUNG ZUR REGENERATION VON IONENAUSTAUSCHERMATERIAL.**

Die Akte enthält technische Angaben, die nach dem Eingang der Anmeldung eingereicht wurden und die nicht in dieserPatentschrift enthalten sind.

(30) Priorität : 09.07.87 DE 3722639
24.02.88 DE 3805813

(43) Veröffentlichungstag der Anmeldung :
**19.07.89 Patentblatt 89/29**

(45) Bekanntmachung des Hinweises auf die Patenterteilung :
**24.06.92 Patentblatt 92/26**

(84) Benannte Vertragsstaaten :
**AT BE CH DE FR GB IT LI LU NL SE**

(56) Entgegenhaltungen :
FR-A- 1 058 447
GB-A- 913 336
US-A- 2 812 300

(56) Entgegenhaltungen :
US-A- 3 335 078
**Chemical Abstracts, vol. 74, nr. 18, 3 May 1971,(COLUMBUS, Ohio, US), G.I. Mal'tsev et al.: "Ion exchange on KU-2cation-exchanger during the application of a variable electric field of audiofrequency", see page 256, abstract 91578m, &Elektrokhimiya 1970, 6(12), 1834-7**

(73) Patentinhaber : **Grünbeck Wasseraufbereitung GmbH Industriestrasse 1 W-8884 Höchstädt/Donau (DE)**

(72) Erfinder : **SCHARFF, Karl Hofrat Strobel-Strasse 29 W-8884 Höchstädt (DE)**
Erfinder : **KRZOSSA, Dieter Matthias-Claudius-Strasse 20 W-4156 Willich (DE)**

(74) Vertreter : **Prüfer, Lutz H., Dipl.-Phys. Harthauser Strasse 25d W-8000 München 90 (DE)**

## Beschreibung

Die Erfindung betrifft ein Verfahren zur Regeneration von Ionenaustauschermaterial, bei dem das Ionenaustauschermaterial in einer Flüssigkeit einem Gleichspannungsfeld ausgesetzt wird. Ferner betrifft die Erfindung eine Vorrichtung nach dem Oberbegriff des Patentanspruches 10.

Ein derartiges Verfahren und eine entsprechende Vorrichtung sind aus der US-A-2,812,300 bekannt. Der Behälter weist eine Anodenseite und eine Kathodenseite auf, die durch eine Membran unterteilt sind. Die Leitfähigkeit der Flüssigkeit wird durch Zusetzen eines Elektrolyten erhöht. Die Ionenbeweglichkeit in einem solchen Falle ist gering.

Bei anderen Verfahren erfolgt die Regeneration von Ionenaustauschermaterial auf chemischem Wege.

Aufgabe der Erfindung ist es, ein Verfahren der eingangs beschriebenen Art zu schaffen, mit dem auf einfache Weise eine schnelle Regeneration von Ionenaustauschermaterial erfolgen kann. Ferner soll eine Vorrichtung zur Durchführung des Verfahrens geschaffen werden.

Die Aufgabe wird durch ein Verfahren der eingangs beschriebenen Art gelöst, welches dadurch gekennzeichnet ist, daß das Gleichspannungsfeld von einem Wechselspannungsfeld oder einem pulsierenden Gleichspannungsfeld überlagert wird. Die Vorrichtung zur Lösung der Aufgabe ist in Patentanspruch 10 gekennzeichnet. Die Vorrichtung hat einen einfachen Aufbau. Mit ihr läßt sich Ionenaustauschermaterial schnell und kostengünstig und mit geringem Stromverbrauch regenerieren.

Weiterbildungen der Erfindung sind in den Unteransprüchen gekennzeichnet.

Ein Elektrolyt ist nicht erforderlich, da ein elektromagnetisches Wechselfeld eingetragen wird, wodurch eine Ionenbeschleunigung und Erhöhung der Leitfähgikeit bewirkt wird.

Weitere Merkmale und Zweckmäßigkeiten der Erfindung ergeben sich aus der Beschreibung von Ausführungsbeispielen anhand der Figuren. Von den Figuren zeigen:

Fig. 1 eine Seitenansicht einer schematischen Darstellung einer ersten Ausführungsform der Erfindung;

Fig. 2 eine diagrammartige Darstellung einer abgewandelten Ausführungsform;

Fig. 3 eine schematische Darstellung einer weiteren abgewandelten Ausführungsform;

Fig. 4 eine schematische Darstellung einer weiteren abgewandelten Ausführungsform;

Fig. 5 eine schematische Darstellung einer weiteren abgewandelten Ausführungsform; und

Fig. 6 eine gegenüber Fig. 3 abgewandelte Ausführungsform.

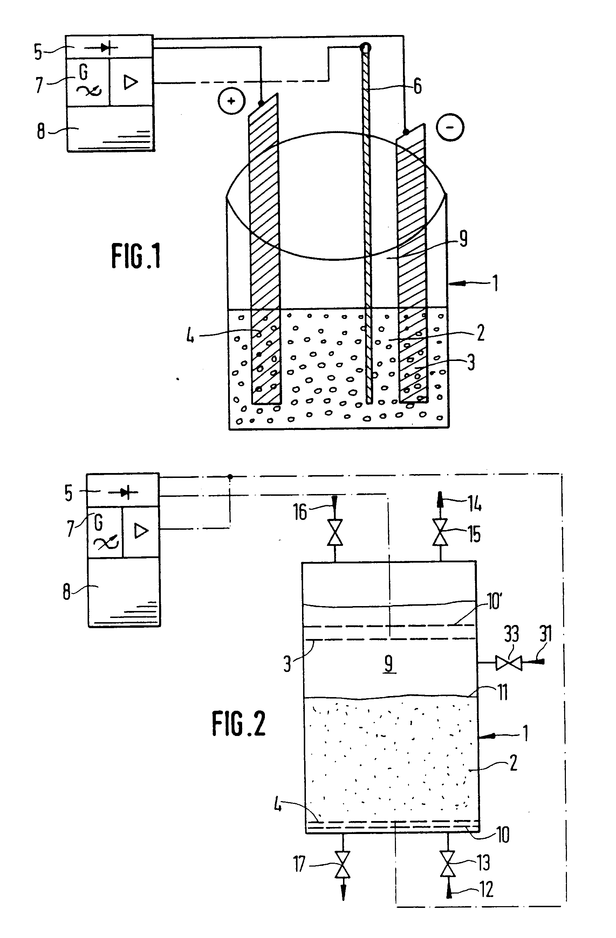

Die in Fig. 1 gezeigte Ausführungsform weist einen Behälter 1 auf. In diesem befindet sich das zu regenerierende Ionenaustauschermaterial 2. In das Ionenaustauschermaterial sind auf den beiden gegenüberliegenden Seiten des Behälters Elektroden in Form einer Kathode und einer Anode so eingeführt, daß die beiden Elektroden einen Abstand voneinander aufweisen und sich zwischen diesen das Ionenaustauschermaterial befindet.

Die beiden Elektroden sind mit einer Gleichspannungsquelle 5 verbunden. Ferner ist zwischen den beiden Elektroden und in einem Abstand zu diesen und ebenfalls in das Ionenaustauschermaterial eintauchend eine weitere Elektrode 6 vorgesehen, die mit einer Wechselspannungsquelle bzw. -generator 7 verbunden ist. Ferner ist eine Steuerung 8 vorgesehen. In den Behälter ist eine Flüssigkeit 9, vorzugsweise normales Leitungswasser, eingegeben, dessen Pegel sich über die Höhe des eingefüllten Ionenaustauschermaterial nach oben erstreckt.

Im Betrieb wird an die Elektroden 3, 4 eine Gleichspannung, vorzugsweise in der Größenordnung von 30 V bis 380 V und besonders bevorzugt von 50 V bis 260 V angelegt, so daß sich ein Gleichstrom im Bereich von 70 bis 10000 mA einstellt. Gleichzeitig wird über die Wechselspannungsquelle 7 eine Wechselspannung oder eine pulsierende Gleichspannung angelegt. Diese liegt im Bereich von 1 KHz bis 10 MHz und besonders bevorzugt von 10 KHz bis 10 MHz. Die Steuerung 8 steuert die Einrichtung derart, daß nach einem Zeitablauf von etwa 3 Minuten die Frequenz der Wechselspannung und/oder die pulsierende Gleichspannung geändert wird. Weitere Änderungen finden jeweils in entsprechenden Zeitabständen statt. Der Zeitabstand kann in Abhängigkeit von den Abmessungen der Einrichtung unterschiedlich sein, sollte aber nicht kürzer als 2 Sekunden und bevorzugt ca. 8 Sekunden bzw. nicht kürzer als ca. 1 Minute gewählt werden.

Handelt es sich bei dem aufzubereitenden Ionenaustauschermaterial beispielsweise um ein bei der Wasserenthärtung eingesetztes und mit Kalzium- oder Magnesiumkationen beladenes Alumosilikat oder Harz, dann werden diese Kationen durch Wasserstoffionen ersetzt. Die Kalzium- und Magnesiumkationen gehen in die Flüssigkeit und werden zusammen mit dieser entfernt.

Soweit die in den nachfolgenden Ausführungsbeispielen gezeigten Teile mit denen in Fig. 1 übereinstimmen, sind sie jeweils mit dem gleichen Bezugszeichen gekennzeichnet.

Bei der in Fig. 2 gezeigten Ausführungsform handelt es sich um einen aufrecht stehenden Behälter 1, bei dem die Anode 4 unmittelbar oberhalb des Bodens vorgesehen ist. Die Anode ist als ein mit einer Vielzahl von Löchern durchbohrtes Blech ausgebildet, vorzugsweise als platinbeschichtete Anode. In einem kleinen Abstand unter dieser ist ein Siebboden 10 vorgesehen, dessen Maschenweite so gewählt ist, daß das Sieb das darüber befindliche, zu regenerierende Ionenaustauschermaterial 2 trägt. Das Ionenaustauschermaterial 2 wird in den Behälter maximal bis zu einer vorbestimmten Höhe 11 eingefüllt. In einem Abstand über der vorbestimmten Höhe ist eine sich über den Querschnitt des Behälters erstreckende Kathode 3 vorgesehen. In einem kleinen Abstand über dieser ist ein weiterer Siebboden 10′ vorgesehen. Diese Siebböden dienen dazu, daß kein Harz in die Zu- und Ableitungen gelangt. An der Bodenseite ist eine Flüssigkeitszuleitung 12 vorgesehen, die über ein von der Steuerung 8 zu betätigendes Ventil 13 einstellbar ist. Auf der Behälteroberseite ist eine Flüssigkeitsableitung 14 vorgesehen, die über ein Ventil 15 einstellbar ist, welches über die Steuerung 8 betätigbar ist. Oberhalb des zu regenerierenden Materials 2 ist ein Spülwasserzulauf 31 mit einem Ventil 33 vorgesehen.

Die Anode 4 ist gleichzeitig mit der Wechselspannungsquelle 7 verbunden.

Im Betrieb wird über die Flüssigkeitszuleitung 12 Wasser bis zu einem Pegel eingeleitet, bei dem die Flüssigkeit auch die Kathode 3 überdeckt. Anschließend werden, wie in dem oben beschriebenen Ausführungsbeispiel, die Gleichspannung und die Wechselspannung oder pulsierende Gleichspannung eingeschaltet. Die Frequenz der Wechselspannung oder pulsierenden Gleichspannung wird, wie in dem oben beschriebenen Ausführungsbeispiel, periodisch geändert. Die Ventile 13, 15 und 33 sind so gesteuert, daß die Flüssigkeit langsam durch den Behälter strömt. Die Flüssigkeit nimmt dabei die ausgetauschten Ionen mit. In dem oben beschriebenen Ausführungsbeispiel werden also die Kalzium- und Magnesiumionen abtransportiert.

Bei dem Behälter 1 kann es sich um den direkt zur beispielsweise Wasseraufbereitung und insbesondere Wasserenthärtung verwendeten Behälter handeln, bei dem also nicht nur die Wiederaufbereitung des Ionenaustauschermaterials erfolgt, sondern die Wasseraufbereitung auch selbst. Zu diesem Zweck ist der Behälter auf seiner Oberseite mit einem Rohwassereinlaß 16 und einem Reinwasserauslaß 17 verbunden.

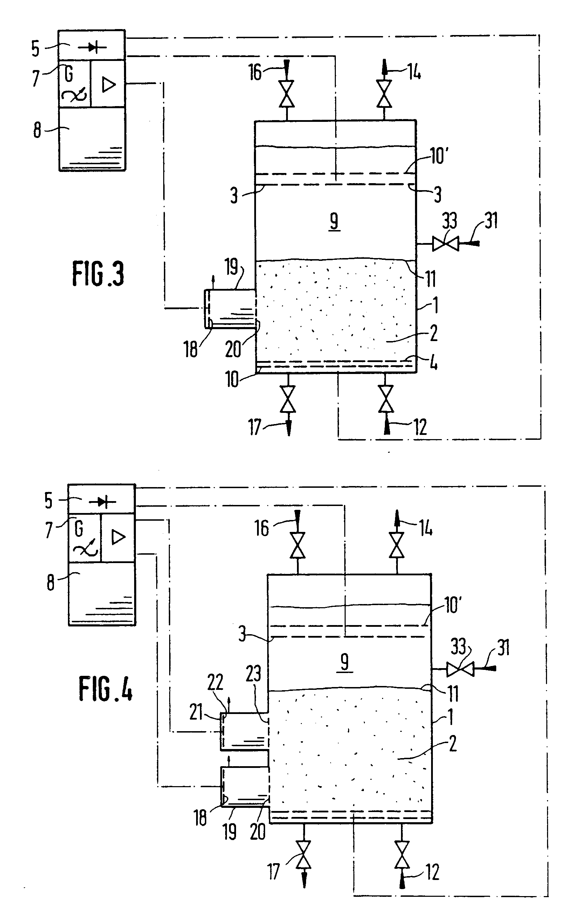

Die in Fig. 3 gezeigte Ausführungsform unterscheidet sich gegenüber der in Fig. 2 gezeigten dadurch, daß eine dritte Elektrode 18 vorgesehen ist. Diese ist in einem flüssigkeitsmäßig mit dem Behälterinneren verbundenen rohrförmigen Ansatz 19 vorgesehen. Der Ansatz 19 liegt in einem Abstand oberhalb der Anode 4 und unterhalb der vorbestimmten Höhe 11. Die Wand zwischen dem eigentlichen Behälterinneren und dem Ansatz wird durch ein Sieb 20 gebildet, welches Wasser durchläßt, das Ionenaustauschermaterial aber abhält. Die dritte Elektrode 18 ist mit der Wechselspannungsquelle verbunden. Die beiden Elektroden 3 und 4 sind lediglich mit der Gleichspannungsquelle verbunden. Das Überlagern der Gleichspannung mit der Wechselspannung oder der pulsierenden Gleichspannung erfolgt über die dritte Elektrode 18. Die Betriebsweise ist die gleiche wie bei dem in Fig. 2 gezeigten Ausführungsbeispiel.

Die in Fig. 4 gezeigte Ausführungsform weist zusätzlich zu dem Ansatz 19 mit der dritten Elektrode einen gleich ausgebildeten zweiten Ansatz 21 mit einer vierten Elektrode 22 und einem entsprechenden Trennsieb 23 auf. Die beiden Elektroden werden mit unterschiedlichen Frequenzen beaufschlagt. Im Betrieb wird die der jeweiligen Impedanz besser entsprechende erste Frequenz der dritten Elektrode und beim Umschalten der Frequenz die Wechselspannung mit der zweiten Frequenz der vierten Elektrode 22 zugeführt.

Bei den oben beschriebenen Ausführungsbeispielen ist jeweils bodenseitig die Anode vorgesehen. Diese Ausbildung dient zur Regeneration von Ionenaustauschermaterial, bei dem angelagerte Kationen auszutauschen sind, also beispielsweise die oben erwähnten Kalzium- und Magnesiumkationen.

Soll hingegen ein Ionenaustauschermaterial regeneriert werden, bei dem angelagerte Anionen auszutauschen sind, beispielsweise Sulfat-, Karbonat-, Chlorid- oder Nitratanionen, dann erfolgt eine Umpolung derart, daß die bodenseitige Elektrode als Kathode und die andere Elektrode als Anode ausgebildet sind.

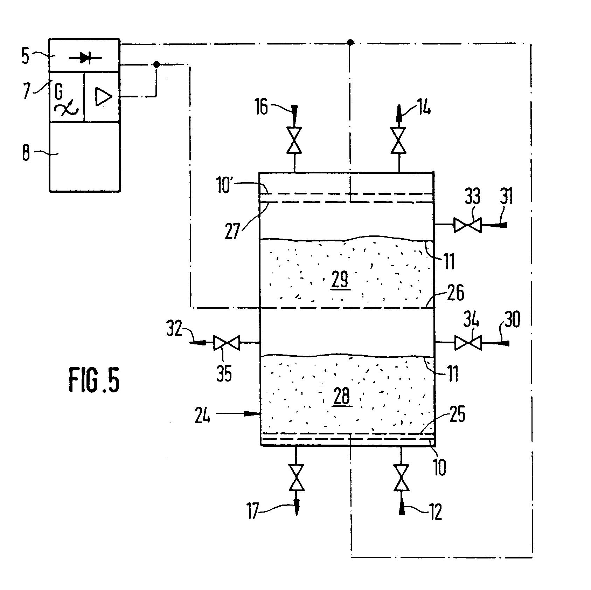

In der in Fig. 5 gezeigten Ausführungsform ist ein aufrecht stehender Behälter 24 vorgesehen, in dem zum Zwecke eines kaskadenartigen Regenerationsbetriebes zunächst unmittelbar oberhalb des Bodens eines bodenseitige Elektrode in Form einer sich über den Querschnitt des Behälters erstreckenden ersten Kathode 25 vorgesehen ist. Unmittelbar unterhalb der Kathode und in einem kleinen Abstand zu dieser ist wiederum ein dem Sieb 10 entsprechendes Sieb vorgesehen. Wie bei den vorhergehenden Ausführungsbeispielen ist in einem Abstand über der vorbestimmten Höhe 11 die entgegengesetzte Elektrode, nämlich die Anode 26, angeordnet. Diese erstreckt sich über den gesamten Querschnitt des Behälters und ist als Netz oder Sieb ausgebildet. Wie bei den vorhergehenden Ausführungsbeispielen ist wieder zu behandelndes Material bis zu einer vorbestimmten Höhe 11 einzufüllen. Oberhalb der vorbestimmten Höhe 11 ist die zur Anode 26 entgegengesetzte Elektrode, also eine zweite Kathode 27, angeordnet, sie sich wiederum über den gesamten Querschnitt des Behälters er streckt. Unmittelbar darüber und in einem kleinen Abstand von der Kathode 27 ist ein dem Siebboden 10 entsprechender Siebboden 10′ vorgesehen. Die Elektroden 25, 26 und 27 sind mit der Gleichspannungsquelle 5 verbunden. Zusätzlich ist die Anode 26 mit der Wechselspannungsquelle 7 verbunden.

Im Betrieb befindet sich oberhalb des Siebes 10 ein Ionenaustauschermaterial 28, bei dem im Wege der Regeneration vorher angelagerte Anionen ausgetauscht werden sollen. Entsprechend befindet sich oberhalb der Anode 26 ein Ionenaustauschermaterial 29, bei dem im Wege der Regeneration vorher angelagerte Kationen ausgetauscht werden sollen. Zur Regeneration wird über die Flüssigkeitszuleitung Leitungswasser zugeführt, welches wenigstens bis über die zweite Kathode 27 reicht.

Wie bei den in den Fig. 2 bis 4 gezeigten Ausführungsformen ist auch hier unmittelbar oberhalb des zu regenerierenden Materials 28, 29 an einer Seite des Behälters ein Spülwasserzulauf 30, 31 vorgesehen. Der jeweilige Zulauf ist über entsprechende Ventile 33, 34, 35 einstellbar, die über die Steuerung 8 betätigt werden. Gleichzeitig ist in der im wesentlichen dem Wasserzulauf 30 gegenüberliegenden Seite des Behälters ein Spülwasserablauf 32 vorgesehen, der über ein Ventil betätigbar ist, welches über die Steuerung 8 gesteuert wird. Über den Spülwasserablauf 32 kann das Spülwasser mit den aus dem Material 28 ausgetauschten Anionen abgeleitet werden.

In dem oben beschriebenen Ausführungsbeispiel wird die Wechselspannung über die Anode 26 angelegt. Stattdessen kann die Wechselspannung über eine gesonderte Elektrode entsprechend denen der Elektroden 18 oder 18 und 22 in den vorhergehenden Ausführungsbeispielen angelegt werden.

Bei der in Fig. 5 gezeigten Ausführungsform handelt es sich wiederum um eine Wasseraufbereitungseinrichtung, bei der das aufzubereitende Wasser über die Leitung 16 zugeführt wird. In dem Ionenaustauschermaterial 29 werden Kationen, also beispielsweise Kalzium- und Magnesiumkationen ausgetauscht. Das Wasser tritt dann weiter durch das zweite Ionenaustauschermaterial 28 hindurch, wo Anionen, wie beispielsweise Sulfatanionen, ausgetauscht werden. Ohne Umfüllen der Ionenaustauschermaterialien kann dann die oben beschriebene Regeneration im gleichen Behälter erfolgen.

Die Regeneration kann außer in einer Wasseraufbereitungsanlage auch in anderen Anlagen eingesetzt werden, wie beispielsweise in galvanischen Betrieben.

Bei einem Ausführungsbeispiel beträgt der Abstand zwischen Anode und Kathode 45 cm und die Harzbetthöhe 35 cm. Die angelegte Gleichspannung beträgt ca. 150 V. Die Durchflußmenge des während des Regenerierens über die Leitung 12 zugeführten Wassers ist so gewählt, daß der Gleichstrom ca. 1100 mA beträgt. Während der ersten Periodendauer wird eine Wechselspannung mit einer Frequenz von 100 KHz angelegt, die periodisch durch eine Frequenz von 400 KHz ersetzt wird.

Die Periode für das Umschalten zwischen den zwei verschiedenen Frequenzen liegt in der Größenordnung von mehreren Minuten und hängt von der Änderung der Leitfähigkeit im Harzbett ab. Das Umschalten erfolgt bevorzugt dann, wenn die Leitfähigkeit im Kathodenraum etwa 200 % oder mehr der Leitfähigkeit des Rohwassers beträgt, also eine Leitfähigkeit von 1000 µS/cm oder mehr. Die Periode sollte jedoch nicht kürzer als 2 Sekunden, bevorzugt ca. 8 Sekunden bzw. nicht kürzer als etwa 1 Minute sein.

Die Einstellung der anzulegenden Spannung und Spülstromstärke wird so gewählt, daß bei gegebener Ionenaustauschermaterialmenge die Stromstärke im wesentlichen unter 2 A liegt, damit nicht zu viel Sauerstoff an der Anode produziert wird.

Grundsätzlich wird die Gleichspannung vorzugsweise im Bereich von 30 V bis 380 V und besonders bevorzugt von 50 V bis 260 V gewählt. Die Wechselspannungen oder pulsierenden Gleichspannungen können im Bereich von 1 KHz bis 10 MHz und bevorzugt von 10 KHz bis 10 MHz gewählt werden.

Während der Regeneration wird in regelmäßigen Abständen das Gleichspannungsfeld für einen Moment von wenigstens 10 Sekunden und bevorzugt für etwa 2 bis 3 Minuten umgepolt, damit sich an den Elektroden abgelagerte Materialien, beispielsweise Kalzium an der Kathode, wieder lösen.

Die Elektroden sind insbesondere auch deshalb von einer Vielzahl von kleinen Löchern durchsetzt, damit der Flüssigkeitsstrom den sich an den Elektroden ansammelnden Sauerstoff bzw. Wasserstoff wegspülen kann.

In den oben beschriebenen Ausführungsbeispielen erfolgt das Ändern der Wechselspannung jeweils durch direktes Umschalten zwischen der ersten und der zweiten Frequenz. In einer abgewandelten Ausführungsform erfolgt die Änderung dadurch, daß eine kontinuierliche Frequenzänderung zwischen einer ersten und einer zweiten Frequenz durchgeführt wird.

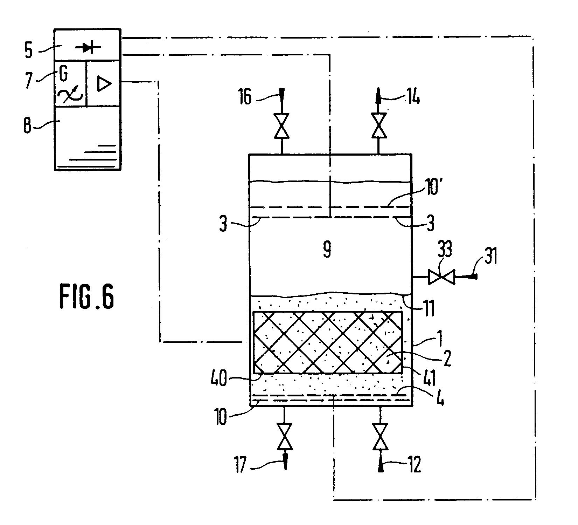

Bei der in Fig. 6 gezeigten Ausführungsform ist die in Fig. 3 gezeigte Elektrode 18 ersetzt durch eine netzförmig ausgebildete Elektrode 40, die sich zwischen Kathode 3 und Anode 4 und im wesentlichen quer zur Verbindungslinie zwischen diesen beiden innerhalb des Gefäßes in Umfangsrichtung erstreckt. Der netzförmige Abschnitt ist quasi ringsegmentförmig ausgebildet, weist also einen Spalt 41 auf.

## Patentansprüche

1. Verfahren zur Regeneration von Ionenaustauschermaterial, bei dem das Ionenaustauschermaterial in einer Flüssigkeit einem Gleichspannungsfeld ausgesetzt wird, dadurch gekennzeichnet, daß das Gleichspannungsfeld von einem Wechselspannungsfeld oder pulsierenden Gleichspannungsfeld überlagert wird.

EP 0 324 024 B1

2. Verfahren nach Anspruch 1,
dadurch gekennzeichnet, daß das Wechselspannungsfeld oder die pulsierende Gleichspannungsfeld eine Wert wechselnde Frequenz aufweist.

3. Verfahren nach einem der Ansprüche 1 oder 2,
dadurch gekennzeichnet, daß für den Gleichstrom die Bereiche von 70 bis 10 000 mA und/oder für die Frequenz die Bereiche von 1 KHz und bevorzugt von 10 KHz bis 10 MHz genutzt werden.

4. Verfahren nach einem der Ansprüche 1 bis 3,
dadurch gekennzeichnet, daß das Ändern der Frequenz in Abständen von ca. 1 Minute und mehr erfolgt.

5. Verfahren nach einem der Ansprüche 1 bis 3,
dadurch gekennzeichnet, daß die Frequenz zwischen einer ersten und einer zweiten Frequenz kontinuierlich geändert wird.

6. Verfahren nach Anspruch 5,
dadurch gekennzeichnet, daß die Periode der Änderung mindestens 2 Sekunden und bevorzugt ca. 8 Sekunden beträgt.

7. Verfahren nach Anspruch 6,
dadurch gekennzeichnet, daß die Periode der Änderung ca. 1 Minute oder mehr ist

8. Verfahren nach einem der Ansprüche 1 bis 7,
dadurch gekennzeichnet, daß das Gleichspannungsfeld in zeitlichen Abständen für einen Moment umgepolt wird, wobei das Gleichspannungsfeld bevorzugt im Bereich von etwa 30 V bis 380 V und nach bevorzugten im Bereich von etwa 50 V bis 260 V liegt.

9. Verfahren nach einem der Ansprüche 1 bis 8,
dadurch gekennzeichnet, daß das Ionenaustauschermaterial während der Regeneration einem Flüssigkeitsstrom durchlaufen wird.

10. Vorrichtung zum Regenerieren von Ionenaustauschermaterial (2,28) mit einem das Material (2,28) und einen Flüssigkeit aufnehmenden Behälter (1) und zwei als Anode bzw, als Kathode (25,27) ausgebildeten Elektroden (3,4,25,26) zum Anlegen eines Gleichspannungsfeldes, wobei sich zwischen den Elektroden das zu regeneriende Material (2,28) befindet, dadurch gekennzeichnet, daß eine Elektrode (3, 4, 6, 18, 22, 126, 40) zum Überlagern des Gleichspannungsfeldes mit einem Wechselspannungsfeld oder einem pulsierenden Gleichspannungsfeld vorgesehen ist.

11. Vorrichtung nach Anspruch 10,
dadurch gekennzeichnet, daß eine der Elektroden (4,25) an der Bodenseite des Behälter (1) und die andere Elektrode (3,26) oberhalb des Materiales (2,28) angeordnet ist.

12. Vorrichtung nach Anspruch 10 oder 11,
dadurch gekennzeichnet, daß die Elektroden eine Vielzahl von Durchbrechungen aufweisen.

13. Vorrichtung nach einem der Ansprüche 11 oder 12,
dadurch gekennzeichnet, daß unterhalb der bodenseitig angeordneten Elektrode (4,25) und in einem Abstand von dieser ein das Material (2) aufnehmender Siebboden (10) vorgesehen ist, und daß oberhalb der anderen Elektrode (3,26) und in einem Abstand von dieser ein weiterer Siebboden (10') vorgesehen ist.

14. Vorrichtung nach einem der Ansprüche 10 bis 13,
dadurch gekennzeichnet, daß die Elektrode (6,18,22,40) zum Anlegen des Wechselspannungsfeldes oder des pulsierenden Gleichspannungsfeldes zwischen den als Anode bzw. Kathode ausgebildeten Elektroden vorgesehen ist.

15. Vorrichtung nach Anspruch 14,
dadurch gekennzeichnet, daß die Elektrode (18, 22) an einer Seite des Behälters (1) oder daß die Elektrode (40) als ein sich im Behälterinneren in Umfangsrichtung quer zur Verbindungslinie zwischen den als anode bzw. Kathode ausgebildeten Elektroden erstreckender netzförmiger Abschnitt vorgesehen ist.

16. Vorrichtung nach Anspruch 15,
dadurch gekennzeichnet, daß zwischen der Elektrode (18, 22) und dem das Material (1) aufnehmenden Bereich eine siebartige Zwischenwand (20, 23) vorgesehen ist.

17. Vorrichtung nach einem der Ansprüche 10 bis 13,
dadurch gekennzeichnet, daß die Elektrode zum Anlegen der Wechselspannungsfeldes oder des pulsierenden Gleichspannungsfeldes die Anode ist.

18. Vorrichtung nach einem der Ansprüche 10 bis 17,
dadurch gekennzeichnet, daß ein Flüssigkeitsablauf (14) oberhalb der Materialhöhe (11) vorgesehen ist.

19. Vorrichtung nach einem der Ansprüche 10 bis 18,
dadurch gekennzeichnet, daß beider Regeneration von Anionen austauschen die bodenseitige Elektrode (4,25) als Kathode und die gegenüberliegende Elektrode (3,26) als Anode ausgebildet sind.

20. Vorrichtung nach einem der Ansprüche 11 bis 18,

5

dadurch gekennzeichnet, daß bei der Regeneration von Kationen austauschen die bodenseitige Elektrode (4,25) als Anode und die gegenüberliegende Elektrode (3,26) als Anode ausgebildet sind.

21. Vorrichtung nach einem der Ansprüche 19 bis 20, dadurch gekennzeichnet, daß oberhalb der gegenüberliegenden Elektrode (26) und in einem Abstand zu dieser eine weitere Elektrode (27) des der bodenseitigen Elektrode (25) entsprechenden Typs vorgesehen ist.


**Claims**

1. A method for regeneration of ion exchange material, wherein the ion exchange material in a liquid is exposed to a direct voltage field, characterized in that the direct voltage field is superposed by an alternating voltage field or a pulsating direct voltage field.

2. The method according to claim 1, characterized in that the alternating voltage field or the pulsating direct voltage field has a frequency with varying value.

3. The method according to claim 1 or 2 characterized in that for the direct voltage field the range from 70 to 10 000 mA is used and/or for the frequency the range from 1 KHz and preferred from 10 KHz to 10 MHz is used.

4. The method according to one of claims 1 - 3, characterized in that the frequency variation is performed in periods of about one minute or longer.

5. The method according to claims 1 - 3, characterized in that the frequency is continuously varied between a first frequency and a second frequency.

6. The method according to claim 5, characterized in that the cycle of the variation is at least 2 seconds and preferably about 8 seconds.

7. The method according to claim 6, characterized in that the cycle of variation is about 1 minute or longer.

8. The method according to one of claims 1 - 7, characterized in that the direct voltage field is momentarily polereversed in intervals of time, the direct voltage field being preferred in the range of about 30 V - 380 V and more preferred in the range of about 50 V - 260 V.

9. The method according to one of claims 1 - 8, characterized in that a liquid stream passes through the ion exchange material during the regeneration.

10. A device for generating ion exchange material (2, 28) comprising a container (1) receiving the material (2, 28) and a liquid and two electrodes (3, 4, 25, 26) being formed as an anode or as a cathode, respectively, for applying a direct voltage field, the material (2, 28) to be regenerated being between the electrodes, characterized in that an electrode (3, 4, 6, 18, 22, 26, 40) is provided for superimposing an alternating voltage field or a pulsating direct voltage field to the direct voltage field.

11. The device according to claim 10, characterized in that one of the electrodes (4, 25) is arranged at the bottom side of the container (1) and the other electrode (3, 26) is arranged above the material (2, 28).

12. The device according to claim 10 or 11 characterized in that the electrodes comprise a plurality of openings.

13. The device according to one of claims 11 or 12, characterized in that a sieve plate (10) is provided below the bottom side electrode (4, 25) in a distance therefrom supporting the material (2), and that a further seive plate (10') is provided above the other electrode (3, 26) in a distance therefrom.

14. The device according to one of claims 10 - 13, characterized in that the electrode (6, 18, 22, 40) for applying the alternating voltage field or the pulsating direct voltage field is provided between the electrodes formed as anode and cathode, respectively.

15. The device according to claim 14, characterized in that the electrode (18, 22) is provided at a side of the container (1) or that the electrode (40) is provided as a reticular portion extending within the interior of the container in peripheral direction transversely to the connecting line between the electrodes formed as the anode and the cathode, respectively.

16. The device according to claim 15, characterized in that a sieve-type intermediate wall (20, 23) is provided between the electrode (18, 22) and the portion supporting the material (1).

17. The device according to one of claims 10 - 13,

characterized in that the electrode for applying the alternating voltage field or the pulsating direct voltage field is the anode.

18. The device according to one of claims 10 - 17,
characterized in that a liquid discharge (14) is provided above the material level (11).

19. The device according to one of claims 11 - 18,
characterized in that during the regeneration of cation exchange material the bottom side electrode (4, 25) is formed as cathode and the opposite electrode (3, 26) is formed as anode.

20. The device according to one of claims 11 - 18,
characterized in that during the regeneration of cation exchange material the bottom side electrode (4, 25) is formed as anode and the opposite electrode (3, 26) is formed as cathode.

21. The device according to one of claims 19 or 20,
characterized in that a further electrode (27) of the bottom side electrode (25) type is provided above the opposite electrode (28) and in a distance therefrom.


**Revendications**

1. Procédé de régénération de matière échangeuse d'ions, dans lequel on expose ladite matière échangeuse d'ions à un champs de tension continue au milieu d'un liquide, **caractérisé en ce** qu'on superpose sur ledit champ de tension continue un champs de tension alternative ou un champs de tension continue pulsé.

2. Procédé selon la Revendication 1,
**caractérisé en ce** que ledit champ de tension alternative ou ledit champ de tension pulsé a une fréquence à valeur changeante.

3. Procédé selon une quelconque des Revendications 1 ou 2, **caractérisé en ce** qu'on utilise les bandes entre 70 et 10 000 mA pour la courante continue et/ou la gamme de 1 kHz, de préférence la bande entre 10 kHz et 10 MHz, pour la fréquence.

4. Procédé selon une quelconque des Revendications 1 à 3,
**caractérisé en ce** que le changement de la fréquence se fait aux intervalles de 1 minute ou plus environ.

5. Procédé selon une quelconque des Revendications 1 à 3,
**caractérisé en ce** que la fréquence est alternée en continu entre une première et une deuxième fréquence.

6. Procédé selon la Revendication 5,
**caractérisé en ce** que la période d'alternation est au moins 2 secondes et préférablement 8 secondes environ.

7. Procédé selon la Revendication 6,
**caractérisé en ce** que la période d'alternation est 1 minute ou plus environ.

8. Procédé selon une quelconque des Revendications 1 à 7,
**caractérisé en ce** que ledit champs de tension continue est inversé pour un moment aux intervalles, ledit champs de tension continue étant de préférence dans la gamme entre 30 V et 380 V environ, et plus préférablement entre 50 V et 260 V environ

9. Procédé selon une quelconque des Revendications 1 à 8,
**caractérisé en ce** que ladite matière échangeuse d'ions est parcourue par un courant de liquide pendant qu'elle est régénérée.

10. Dispositif de régénération de matière échangeuse d'ions (2, 28), comprenant un récipient (1) recevant ladite matière (2, 28) et un liquide, ainsi que deux électrodes (3, 4, 25, 26) formées comme anode ou respectivement comme cathode pour appliquer un champ de tension continue, ladite matière à régénérer (2, 28) se trouvant entre lesdites électrodes, **caractérisé en ce** qu'une desdites électrodes (3, 4, 6, 18, 22, 26, 40 ) est disposée pour la superposition d'un champs de tension alternative ou un champs de tension continue pulsé sur ledit champ de tension continue.

11. Dispositif selon la Revendication 10,
**caractérisé en ce** qu'une desdites électrodes (4, 25) est disposée du côté de fond dudit récipient (1) pendant que l'autre électrode (3, 26) est disposé au dessus de ladite matière (2, 28).

12. Dispositif selon la Revendication 10 ou 11,
**caractérisé en ce** que lesdites électrodes comprennent une pluralité de perçages.

13. Dispositif selon une quelconque des Revendications 11 ou 12,
**caractérisé en ce** qu'un fond à tamis (10) pour recevoir ladite matière (2) est disposé au dessous et à distance de ladite électrode (4, 25) du côté de fond, et en ce qu'un autre fond à tamis (10') est disposé au dessus et à distance de l'autre électrode (3, 26).

14. Dispositif selon une quelconque des Revendications 10 à 13,

**caractérisé en ce** que ladite électrode (6, 18, 22, 40) pour appliquer ledit champs de tension alternative ou dudit champs de tension continue pulsé est disposée entre lesdites électrodes formées comme anode ou respectivement cathode.

15. Dispositif selon la Revendication 14,

**caractérisé en ce** que ladite électrode (18, 22) est disposée d'un côté dudit récipient (1) ou que ladite électrode (40) est disposée en tant qu'une partie réticulaire qui s'étend en sens circonférentiel à l'intérieur dudit récipient et à travers la ligne de jonction entre lesdites électrodes formées comme anode ou respectivement cathode.

16. Dispositif selon la Revendication 15,

**caractérisé en ce** qu'une cloison du type tamis (20, 23) est disposée entre ladite électrode (18, 22) et la zone recevant ladite matière (1).

17. Dispositif selon une quelconque des Revendications 10 à 13,

**caractérisé en ce** que ladite électrode pour appliquer ledit champ de tension alternative ou ledit champ de tension continue pulsé constitue l'anode.

18. Dispositif selon une quelconque des Revendications 10 à 17,

**caractérisé en ce** qu'une sortie (14) de liquide est disposée au dessus du niveau (11) de la matière.

19. Dispositif selon une quelconque des Revendications 11 à 18,

**caractérisé en ce** qu'en régénération des échangeurs d'anions, l'électrode (4, 25) du côté de fond est configurée comme cathode pendant que l'électrode opposée (3, 26) est destinée comme anode.

20. Dispositif selon une quelconque des Revendications 11 à 18,

**caractérisé en ce** qu'en régénération des échangeurs de cations, l'électrode (4, 25) du côté de fond est configurée comme anode pendant que l'électrode opposée (3, 26) est destinée comme cathode.

21. Dispositif selon une quelconque des Revendications 19 ou 20,

**caractérisé en ce** qu'au dessus et à distance de ladite électrode opposée (26) est disposée une électrode (27) additionnelle du type correspondant au type de ladite électrode (25) du ôté de fond.

FIG.1

FIG.2

FIG.3

FIG.4

FIG.5

FIG.6